# EUROPEAN PATENT APPLICATION

(11) **EP 1 643 684 A1**
(43) Date of publication of application: **05.04.2006**
(21) Application number: 04738337.7
(22) Date of filing: 02.07.2004
(51) Int. Cl.: H04L 12/28, H04L 9/32

(54) **A METHOD FOR PROCESSING THE NETWORK-SELECTED INFORMATION AT THE USER TERMINAL IN A WIRELESS LOCAL AREA NETWORK**

(30) Priority: 03.07.2003 CN 03148222
(71) Applicant: Huawei Technologies Co., Ltd., Longgang District, Shenzehen, Guangdong 518129 (CN)
(72) Inventor: ZHANG, Wenlin, Shenzhen, Guangdong 518129 (CN)
(74) Representative: Manitz, Gerhart
(86) International application number: PCT/CN2004/000739
(87) International publication number: WO 2005/004403

(57) **Abstract**

The present invention discloses a method for processing network selection information of user terminal in wireless local area network (WLAN). When a WLAN user terminal accessing a wireless communications network via a WLAN access network (WLAN AN), the WLAN user terminal sending to the WLAN AN an authentication signaling carrying network selection information. This network selection information of user terminal may be put in the user identity field defined in the format of network access identifier (NAI). This invention enables user terminal to select an appropriate wireless communication network to get accessed when it tries to access via a WLAN connecting with a plurality of wireless communication networks.

## Description

### Field of the Invention

The present invention relates to network accessing technique, more particularly to a method for processing the network selection information of user terminal in a wireless local area network (WLAN).

### Backround of the Invention

As users' demand for an increasingly high rate of wireless access, there emerges WLAN, which is able to provide high-rate wireless data access in a relatively small area. Various techniques have been used in WLAN, among which a technical standard with more applications is IEEE 802.11b. This standard utilizes the frequency band of 2.4GHz with a data transmission rate up to 11 Mbps. Other technical standards utilizing the same frequency band include IEEE 802.11g and the Bluetooth, wherein the data transmission rate of IEEE 802.11g is up to 54Mbps. There are other new standards such as IEEE 802.11 a and ETSI BRAN Hiperlan2 which use the frequency band of 5GHz with the transmission rate up to 54 Mbps as well.

Although there are various standards for wireless access, most WLANs are used for transferring IP data packets. The specific WLAN access standard adopted by a wireless IP network is usually transparent to the upper-level IP. Such a network is typically configured with Access Points (AP) for implementing wireless access of user terminal and with network controlling and connecting devices for implementing IP transmission.

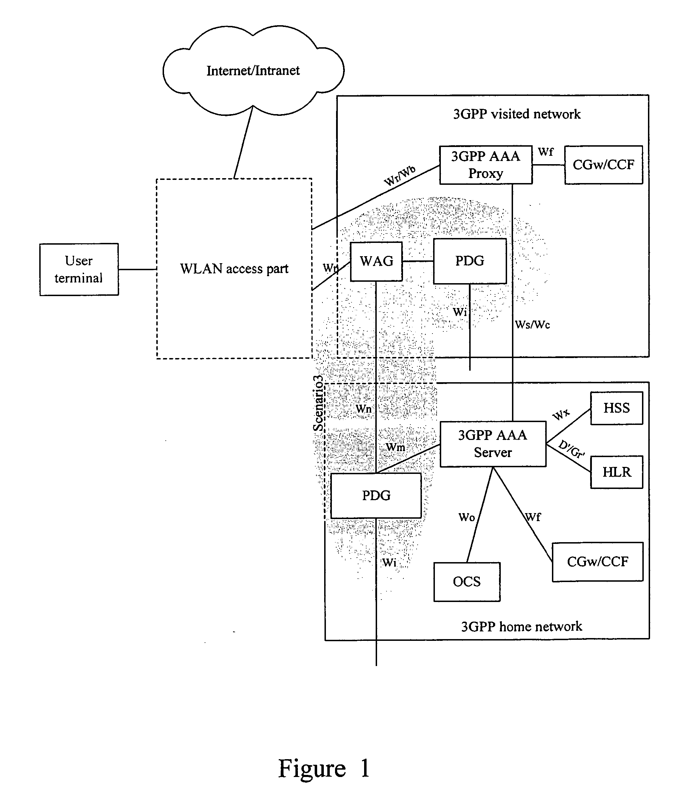

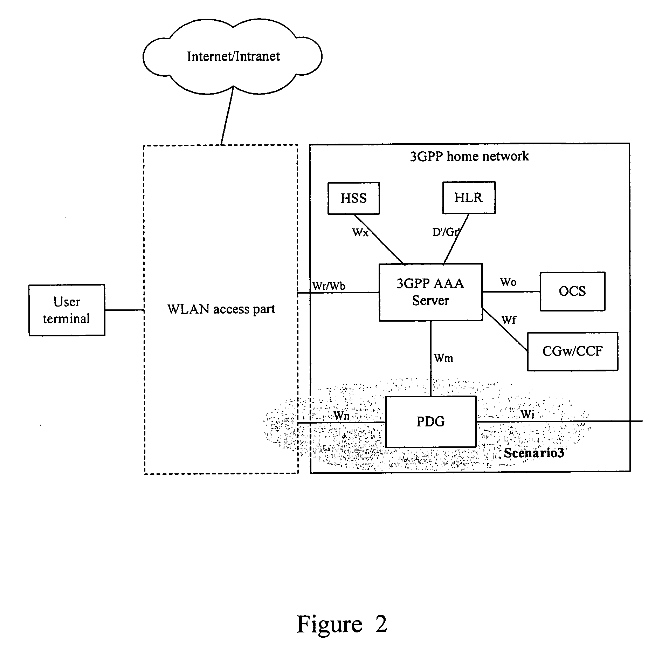

Along with the rising and developing of WLAN, focus of research is shifting to the inter-working of WLAN with various wireless mobile communications networks, such as GSM, CDMA, WCDMA, TD-SCDMA, and CDMA2000. In accordance with the 3GPP standards, user terminal is able to connect with Internet and Intranet as well as the home network and visited network of a 3GPP system via the WLAN access network (WLAN AN). To be specific, when getting accessed locally, a WLAN user terminal will get connected with the 3GPP home network via the WLAN AN, as shown in Figure 2; when roaming, it will get connected with the 3GPP visited network via the WLAN AN. Some entities of the 3GPP visited network are connected with corresponding entities of the 3GPP home network, for instance, the 3GPP Authentication Authorization Accounting (AAA) Proxy in the visited network is connected with the 3GPP AAA server in the home network, the WLAN Access Gateway (WAG) in the visited network is connected with the Packet Data Gateway (PDG) in the home network, as shown in Figure 1. Figure1 and Figure 2 are the schematic diagrams illustrating the networking architectures of a WLAN inter-working with a 3GPP system under roaming and non-roaming circumstances, respectively.

As shown in Figure 1 and Figure 2, a 3GPP system primarily includes Home Subscriber Server (HSS)/ Home Location Register (HLR), 3GPP AAA server, 3GPP AAA proxy, WAG, PDG, Charging Gateway (CGw)/Charging information Collecting Function (CCF), and Online Charging System (OCS). User terminal, WLAN AN, and all the entities of the 3GPP system together constitute a 3GPP-WLAN inter-working network, which can be regarded as a WLAN service system. In this service system, 3GPP AAA server is in charge of authentication, authorization, and accounting of user terminal, collecting the charging information sent from the WLAN AN and transferring the information to the charging system; PDG is in charge of transmission of user data from the WLAN AN to the 3GPP network or other packet data networks; and the charging system mainly receives and records the charging information of user terminal transferred from the network while OCS instructs the network to transmit online charging information periodically in accordance with the expenses of the online charged users, makes statistics and conducts control.

Under non-roaming circumstances, when a WLAN user terminal desires to get accessed directly to the Internet/Intranet, the user terminal can access to Internet/Intranet via a WLAN AN after it accomplishes authentication with the AAA server (AS) via the WLAN AN. Should the WLAN user terminal desire to get accessed to the service of 3GPP packet switched (PS) realm as well, it may further request the service of Scenario 3 from the 3GPP home network. That is, the WLAN user terminal initiates a service authorization request for Scenario 3 to the AS of the 3GPP home network, which will carry out service authentication and authorization for that request; if the authentication and authorization succeeds, AS will send an access accept message to the user terminal and assign a corresponding PDG for the user terminal. When a tunnel is established between the user terminal and the assigned PDG, the user terminal will be able to get accessed to the service of 3GPP PS realm. Meanwhile, the offline charging system and OCS records the charging information in accordance with the user terminal's occupation of the network.

Under roaming circumstances, when a WLAN user terminal desires to get accessed directly to the Internet/Intranet, it may make a request to the 3GPP home network by way of the 3GPP visited network for access to the Internet/Intranet. Should the user terminal also desire to request the service of Scenario 3 to get accessed to the service of the 3GPP PS realm, the user terminal needs to initiate via the 3GPP visited network a service authorization process at the 3GPP home network. The authorization is carried out likewise between the user terminal and AS of the 3GPP home network. After the authorization succeeds, AS assigns the corresponding home PDG for the user terminal, then the user terminal will be able to get accessed to the service of 3GPP PS realm of the home network after it establishes a tunnel with the assigned PDG via the WAG of the 3GPP visited network.

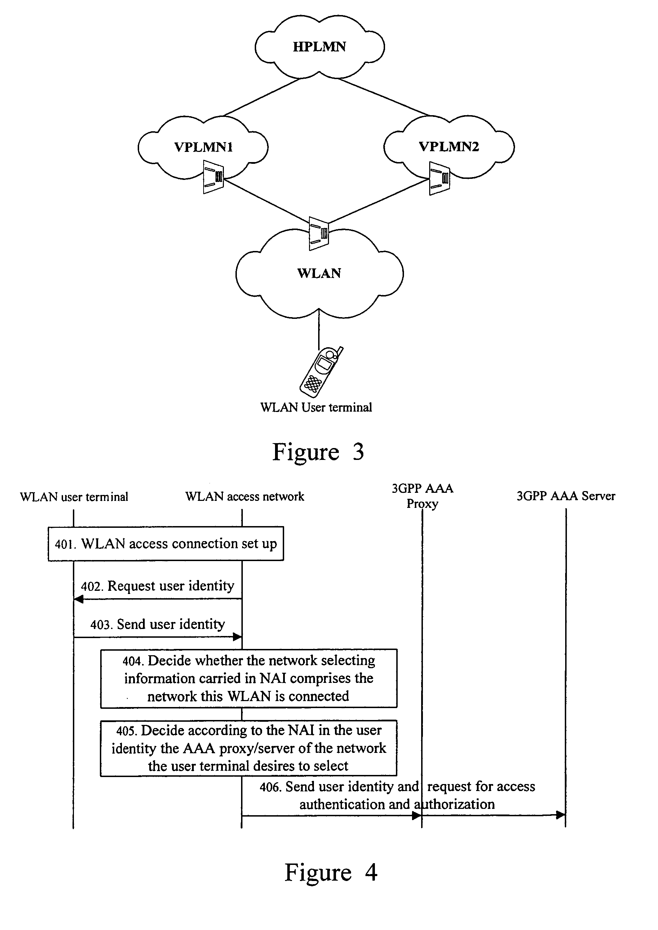

As shown in Figure 3, in a 3GPP-WLAN inter-working network, if a WLAN is connected at the same time with a plurality of 3GPP visited networks, that is, a plurality of wireless communication networks (3GPP visited networks herein refer to Visited Public Land Mobile Networks (VPLMN)) to which the WLAN AN can route the authentication signaling, it will be necessary for a WLAN user terminal to select the desired VPLMN to access after the user terminal gets accessed to the WLAN. For instance, in China, a WLAN AN may be connected simultaneously with two operating VPLMN, China Mobile and China Unicom; then a user of China Unicom, after getting accessed via the WLAN, has to instruct the WLAN AN to get it accessed to the operating VPLMN of China Unicom.

For another instance, a French user may roam to a WLAN in China, if the home network of the French user has roaming protocols with both China Mobile and China Unicom, then under the circumstances that the WLAN is connected with both China Mobile and China Unicom, the French user will need to select a VPLMN to get accessed after accessing the WLAN. At present, however, there has not yet been a solution to how to notify the WLAN of the information about the user terminal-selected network to be accessed.

### Summary of the Invention

In view of the above, the primary object of this invention is to provide a method for processing the network selection information of user terminal in WLAN such that the user terminal is able to select an appropriate wireless communication network to get accessed when it is accessing via a WLAN connecting with a plurality of wireless communication networks.

To attain the above object, a solution is presented by this invention as follows:

In the method for processing network selection information of user terminal in WLAN, when a WLAN user terminal accesses a wireless communication network via a WLAN AN, the WLAN user terminal sends to the WLAN AN an authentication signaling carrying network selection information.

The method further includes:
a1. upon receiving the authentication signaling sent by the WLAN user terminal, the WLAN AN judges whether the network selection information can be utilized, if yes, goes to step a2; otherwise, ends the current procedure or goes to an exception handling procedure;
a2. The WLAN AN, according to the network selection information, forwards the authentication signaling to the Authentication Authorization Accounting (AAA) functionality in a network currently serving the WLAN user.

The exception handling procedure includes: a first hop AAA functionality advertises the WLAN user terminal of the information about the wireless communication networks to which the WLAN AN is able to route authentication signaling; the WLAN user terminal, according to the received information, makes a network selection and sends the network selection information to the WLAN AN again, and then returns to step al.

The method further includes in step a2: the WLAN AN judges whether the network selection information contains the information of visited network, if yes, the WLAN AN, according to the information of visited network, forwards the authentication signaling to an AAA proxy in the visited network; otherwise, the WLAN AN, according to the network selection information, forwards the authentication signaling to an AAA server in the home network of the WLAN user.

In the above solution, the network selection information is put in the user identity field which includes username and realm name, and the method further includes: upon receiving the authentication signaling of the WLAN user terminal, the AAA proxy in the visited network obtains the realm name of home network by extracting the realm name portion of the user identity field, then sends, according to the realm name of home network, the authentication signaling of the WLAN user terminal to the AAA server in the home network for authentication and authorization. The method further includes: upon receiving the authentication signaling of the WLAN user terminal, if the AAA proxy in the visited network decides that the user identity field contains the information of visited network and the information of visited network is same to the information of the network where the AAA proxy is located, then modifies the user identity field such that the field contains only the realm name of home network, and sends the modified signaling to the home network of the WLAN user.

In the above solution, the network selection information is put in the user identity field which includes a username portion and a realm name portion, and the method further includes: upon receiving the signaling from the home network of the WLAN user, the visited network serving the WLAN user adds the information of visited network to the user identity field and then forwards the signaling to the WLAN user terminal.

In the above solution, whether the realm name contains the information of visited network is decided according to the length of the realm name portion in the user identity field.

In the above solution, the network selection information, put in the realm name portion of the user identity field, is the realm name of the home network of the user, and the user identity field is defmed in the format of network access identifier (NAI). The network selection information, put in the realm name portion of the user identity field, is the combination of the realm name of the home network of the WLAN user, a separator, and the information of the visited network serving the WLAN user, and the user identity field is defined in the format of NAI. The realm name portion of the user identity field is configured with the identifying information expressly indicating that this realm name portion contains the information of visited network. The identity of visited network is jointly constituted by a mobile country code (MCC) and a mobile network code (MNC). The realm name portion of NAI is in the form of realm name of home network@realm name of visited network; or identity of visited network@realm name of home network; or identity of visited network.realm name of home network.

In the above solution, the network selection information is put in the username portion of the user identity field, and the user identity field is defined in the format of NAI. Or the information of visited network in the network selection information is put in the realm name portion of the user identity field, the original usemame and the realm name of home network are put in the username portion of the user identity field and are separated by a separator, and this user identity field is defined in the format of NAI.

The above network selection information is put in an independently configured field. The WLAN user terminal is WLAN User Equipment (WLAN UE).

In accordance with the method provided by this invention for processing the network selection information of user terminal in WLAN, the signaling of authentication of user terminal is used to carry the network selection information of user terminal such that the WLAN AN could determine the wireless communication network to be accessed by the user terminal according to the network selection information of the current user terminal, thereby giving a solution to the transfer and processing of network selection information when a WLAN user terminal selects a wireless communication network.

Other methods and advantages of the present invention will be or become apparent to one with skill in the art upon examination of the following drawings and detailed description. It is intended that all such additional methods and advantages be included within this description, be within the scope of the present invention, and be protected by the accompanying claims.

### Brief Description of the Drawings

Figure 1 is a schematic diagram illustrating the network architecture of inter-working WLAN and 3GPP system under roaming circumstances;
Figure 2 is a schematic diagram illustrating the network architecture of inter-working WLAN and 3GPP system under non-roaming circumstances;
Figure 3 is a schematic diagram illustrating the network architecture of WLAN connecting with a plurality of visited networks;
Figure 4 is the flowchart for processing the network selection information of user terminal in accordance with one embodiment of this invention.

### Embodiments of the Invention

The key idea of this invention is as follows: network selection information of an user terminal is carried in a interactive signaling between the user terminal and WLAN, then when the user terminal accesses, the WLAN can recognize a wireless communication network to be accessed by the user terminal and connect the user terminal to the selected network for authentication and subsequent operations.

The network selection information may be put in an independently configured field in an authentication signaling, or put in a user identity field of the authentication signaling. Typically, the user identity field is defined in the format of NAI, consisting of a username portion and a realm name portion, and the username portion and the realm name portion are separated by the separator @, thus represented as username@realm name. In accordance with one embodiment of the invention, there may be two modes for implementing transmission of the network selection information of user terminal using the user identity field as the carrier: one is to put the network selection information in the realm name portion; the other is to put the network selection information in the usemame portion. The network selection information may include only the realm name of home network, or may include the realm name of home network plus the information of visited network, wherein the information of visited network includes realm name of visited network or identity of visited network. The identity of visited network is usually constituted by a standard PLMN identifier, i.e. jointly constituted by MCC and MNC. Obviously, the identity of visited network may also be constituted by the name of operator, i.e. such English characters or Chinese characters or characters of other languages as "CMCC", "ORANGE", "VODAFONE", "CHINA MOBILE", "CHINA UNICOM", and etc. The following description is given by taking as an example the mode in which the information of visited network is put in the realm name portion of the user identity field.

Based on the network architecture shown as Figure 3, in accordance with one embodiment of the invention, the procedure for transferring and processing the information of user terminal-selected wireless communication network to be accessed, as shown in Figure 4, includes the steps of:
Steps 401~403: When accessing a 3GPP-WLAN inter-working network, a WLAN user terminal sets up connection with the WLAN AN; then the WLAN AN sends a user identity request to the user terminal and instructs the user terminal to send an authentication signaling carrying the user identity; after receiving the request, the WLAN user terminal sends to the WLAN AN a signaling which contains a user identity field, carrying network selection information of the user terminal. The network selection information may be the information of a pre-set wireless communication network to be accessed by the user terminal or the network selected by the user terminal according to the selection information issued by the network.
Step 404: After receiving an access request, the WLAN AN decides whether the network selection information carried in the user identity field is the utilizable information of a wireless communication network connected with this WLAN, if yes, perform step 405; otherwise, i.e. the WLAN can not utilize network selection information to recognize the wireless communication network, the first hop AAA functionality in the WLAN AN or in a wireless network then issues to the current user terminal the information of the wireless communication networks connected with this WLAN and requests the user identity; the user terminal makes another selection after receiving the message from the WLAN, then puts the information of the selected wireless communication network in the user identity field NAI, and sends the information to the network again for recognition; return to step 404. In this step, if WLAN can not utilize the network selection information to recognize the wireless communication network, the current procedure may be terminated immediately as well, thus performing no step of issuing the network information to the user terminal and reselecting the network by the user terminal.
Steps 405~406: The WLAN AN determines the wireless communication network to be accessed by the current user terminal according to the user identity field NAI, i.e. the WLAN AN further judges whether the network selection information carried in the user identity field contains the information of visited network, if yes, the WLAN AN sends an authentication signaling to an AAA proxy of the visited network covering the user terminal according to the information of visited network in the user identity field, the AAA proxy then forwards the authentication signaling to the 3GPP AAA server of the home network of the user terminal for authentication; otherwise, the WLAN AN sends the authentication signaling to the AAA server of the home network of the user terminal according to the network selection information in the user identity field. In the above two cases, the AAA proxy of the visited network and the AAA server of the home network separately act as the AAA functionality currently serving the user.
After step 406, the procedure may further include: after receiving the authentication signaling of the user terminal, the 3GPP AAA proxy of the visited network judging whether the realm name of the visited network in the user identity field is that of the network where the 3GPP AAA proxy is located, if yes, removing the information of visited network in the user identity field and keeping only the realm name of home network, then sending the authentication signaling to the home network for implementing the procedure of authentication and authorization.

In the above procedure, under non-roaming circumstances, the realm name portion of the user identity field is the realm name of home network of the current user terminal, indicating the home PLMN of the user terminal, then, according to this realm name, the WLAN network sends the AAA signaling of the current user terminal to the home PLMN for authentication. Under roaming circumstances, the realm name portion in the user identity field is the roaming realm name, including the realm name of visited network and the realm name of home network of the current user terminal. The WLAN network, according to the roaming realm name, sends the authentication information of the current user terminal to the AAA proxy of the visited network; after receiving the user identity field, the AAA proxy of the visited network finds that the realm name portion therein is the roaming realm name and the realm name of visited network indicates the network where the AAA proxy is located, then extracting the realm name of home network of the user identity field, and sends, according to the realm name of home network, the authentication information of the current user terminal to the AAA server of the home network for authentication and authorization.

There may be several modes of composition of a roaming realm name:
1) The realm name portion includes the realm name of home network, a separator, and the realm name of visited network in order, and the separator may be "@" or "." or "%" or "!". Take the separator "@" as an example, the realm name portion of the user identity field is the in form of realm name of home network @ realm name of visited network, and the user identity field is the in form of usemame @ realm name of home network @ realm name of visited network. For instance, if the realm name of visited network is vMCC.vMNC.WLAN.3GPPNetwork.org and the realm name of home network is hMCC.hMNC.WLAN.3GPPNetwork.org, the realm name portion of the user identity field is: hMCC.hMNC.WLAN.3 GPPNetwork.org@vMCC.vMNC.WLAN.3GPPNetwork.org.
2) The realm name portion includes the identity of visited network, a separator, and the realm name of home network in order, and the separator is "." or "%" or "! ". Take the separator "." as an example, the realm name portion of the user identity field is in the form of identity of visited network.realm name of home network, and the user identity field is in the form of username@identity of visited network.realm name of home network. For instance, if the identity of visited network is vMCC.vMNC and the realm name of home network is hMCC.hMNC.WLAN.3GPPNetwork.org, the realm name portion of the user identity field is: vMCC.vMNC.hMCC.hMNC.WLAN.3GPPNetwork.org, wherein vMCC is the MCC of the visited network and hMCC is the MCC of the home network.
3) The realm name portion includes the identity of visited network, a separator, and the realm name of home network in order, and the separator is "@" or "%" or "!". Take the separator "@" as an example, the realm name portion of the user identity field is in the form of identity of visited network@realm name of home network, and the user identity field is in the form of username@identity of visited network@realm name of home network. For instance, if the identity of visited network is vMCC.vMNC and the realm name of home network is hMCC.hMNC.WLAN.3GPPNetwork.org, the realm name portion of the user identity field is: vMCC.Vmnc@hMCC.hMNC.WLAN.3GPPNetwork.org, wherein vMCC is the MCC of the visited network and hMCC is the MCC of the home network.

As to the way of recognizing a roaming realm name, an explicit identifier may be configured in the realm name of visited network, indicating that this realm name is a realm name of visited network, for instance, label the realm name of visited network as MCC.MNC.WLANvisited.3GPPNetwork.org, wherein WLANvisited is the explicit identifier; or add an identifying bit before the roaming realm name, for instance, 0realm name of home network@realm name of visited network indicates that the current realm name is a roaming realm name such that it can be sent to the AAA server capable of handling roaming realm names for being processed. A roaming realm name can also be determined by the length of realm name, i.e. determine according to the length of realm name whether the current realm name portion is a roaming realm name, for the length of the variables representing realm names, MCC and MNC, are all fixed.

The implementation of putting the information of visited network in the usemame portion is basically the same as the implementation of putting the information in the realm name portion, and can adopt the above 3 modes similarly; or the realm name of visited network or identity of visited network may be used as the realm name portion of the user identity field while the original username and the realm name of home network of the user terminal are taken as the username portion of the user identity field, wherein the original usemame and the realm name of home network are separated by a separator, which may be "@" or "." or "%".

In one embodiment of this invention, a roaming realm name is not modified during transmission. AAA proxy can recognize all the defined roaming realm names and forward the realm names to the home network of the current user terminal. When the home network determines according to the roaming realm name that a user of this network is roaming in another network, the network will process the request of the user terminal in a normal way and make interaction by modifying the roaming realm name in the identity, i.e. after receiving the signaling sent to the current visited network covering the user terminal from the home network of the current user terminal, the AAA proxy of the visited network will replace the realm name portion of the user identity field with the roaming realm name, and then send it to the appropriate user terminal.

As for the signaling the network sends to user terminal, after the visited network covering the current user terminal receives the signaling sent by the home network of this user terminal, the visited network will first modify the user identity field in the signaling, i.e. add the realm name of visited network or identity of visited network in the user identity field, and then send the modified signaling to the current user terminal.

After receiving the signaling sent down from the network, the WLAN user terminal will also make decision according to the user identity field in the signaling, if the realm name portion of the user identity field of this signaling contains only the realm name of home network, the realm name portion of the user identity field sent by the WLAN user terminal when responding to the network will also take the form of realm name of home network only. If the realm name portion of the user identity field in the signaling is a roaming realm name, the WLAN user terminal will determine the composition of the realm name portion of the user identity field according to the current network selected by itself when responding to the network; if the network currently selected is the home network, the realm name portion of the user identity field will contain the realm name of home network only, if the network currently selected is not the home network, the realm name portion of the user identity field includes the realm name of home network as well as the realm name or identity of visited network. In case that it is the user terminal that selects the wireless communication network to be accessed, even if the signaling sent down by the network carries no information of visited network in the user identity field, the authentication signaling sent up by the user terminal will carry the information of visited network in the user identity field, i.e. in this case, whether or not the user identity field of the signaling sent down by the network carries the information of visited network does not affect the user identity field of the signaling sent up. The signaling sent down here by the network may be the signaling sent by the network issuing the information of the wireless communication network to user terminal.

The foregoing description is a preferred embodiment of this invention and should not be construed as limiting the protection scope of this invention.

## Claims

1. A method for processing network selection information of user terminal in Wireless Local Area Network (WLAN), when a WLAN user terminal accessing a wireless communication network via a WLAN access network (WLAN AN), the WLAN user terminal sending to the WLAN AN an authentication signaling carrying a network selection information.

2. The method according to Claim 1, further comprising:
a1. having received the authentication signaling sent by the WLAN user terminal, the WLAN AN checking whether the network selection information can be utilized, if yes, going to step a2; otherwise, ending the current procedure or going to an exception handling procedure;
a2. the WLAN AN judging whether the network selection information contains the information of visited network, if yes, the WLAN AN, according to the information of visited network, forwarding the authentication signaling to an AAA proxy in the visited network; otherwise, the WLAN AN, according to the network selection information, forwarding the authentication signaling to an AAA server in the home network of the WLAN user.

3. The method according to Claim 2, wherein the exception handling procedure comprises: the WLAN AN advertising the WLAN user terminal of information about the wireless communication networks to which the WLAN AN is able to route authentication signaling; the WLAN user terminal, according to the received information, making a network selection and sending network selection information to the WLAN AN again, and returning to step al.

4. The method according to Claim 2, wherein the network selection information is put in the user identity field which comprises a usemame portion and a realm name portion, and the method further comprises: having received the authentication signaling of the WLAN user terminal, the AAA proxy in the visited network obtaining the realm name of home network by extracting the realm name portion of the user identity field, then sending, according to the realm name of home network, the authentication signaling of the WLAN user terminal to the AAA server in the home network for authentication and authorization.

5. The method according to Claim 4, further comprising: having received the authentication signaling of the WLAN user terminal, if the AAA proxy in the visited network deciding that the user identity field contains the information of visited network and the information of visited network is same to the information of the network where the AAA proxy is located, then modifying the user identity field such that the field contains only the realm name portion of home network, and sending the modified signaling to the home network of the WLAN user.

6. The method according to Claim 1, wherein the network selection information is put in the user identity field which comprises usemame portion and realm name portion, and the method further comprises: having received the signaling from the home network of the WLAN user, the visited network serving the WLAN user adding the information of visited network to the user identity field and then forwarding the signaling to the WLAN user terminal.

7. The method according to Claim 2 or Claim 5, wherein whether the realm name contains the information of visited network is decided according to the length of the realm name portion in the user identity field.

8. The method according to Claim 4 or Claim 6, wherein the network selection information, put in the realm name portion of the user identity field, is the realm name of the home network of the user, and the user identity field is defined in the format of network access identifier (NAI).

9. The method according to Claim 4 or Claim 6, wherein the network selection information, put in the realm name portion of the user identity field, is the combination of the realm name of the home network of the WLAN user, a separator, and the information of the visited network serving the WLAN user, and the user identity field is defined in the format of NAI.

10. The method according to Claim 9, wherein the realm name portion of the user identity field is configured with the identifying information expressly indicating that this realm name portion contains the information of visited network.

11. The method according to Claim 10, wherein the information of visited network comprises the realm name of visited network or identity of visited network.

12. The method according to Claim 11, wherein the realm name portion of NAI is in the form of realm name of home network@realm name of visited network.

13. The method according to Claim 11, wherein the realm name portion of NAI is in the form of identity of visited network@realm name of home network.

14. The method according to Claim 11, wherein the realm name portion of NAI is in the form of identity of visited network.realm name of home network.

15. The method according to Claim 4 or Claim 6, wherein the network selection information is put in the usemame portion of the user identity field, and the user identity field is defined in the format of NAI.

16. The method according to Claim 4 or Claim 6, wherein the information of visited network in the network selection information is put in the realm name portion of the user identity field, the original username and the realm name of home network are put in the usemame portion of the user identity field and are separated by a separator, and this user identity field is defined in the format of NAI.

17. The method according to Claim 1, wherein the network selection information is put in an independently configured field.

18. The method according to Claim 11, wherein the identity of visited network is jointly constituted by a mobile country code (MCC) and a mobile network code (MNC).
